# EUROPÄISCHE PATENTSCHRIFT

(11) **EP 3 377 280 B1**
(45) Veröffentlichungstag und Bekanntmachung des Hinweises auf die Patenterteilung: **08.09.2021**
(21) Anmeldenummer: 16798702.3
(22) Anmeldetag: 18.11.2016
(51) Int. Cl.: B25J 17/02, B25J 15/04, B25J 19/00, B25J 19/02

(54) **SCHRAUBVORRICHTUNG UND VERFAHREN ZUM EINDREHEN EINER SCHRAUBE IN EINE WAND**
SCREWING APPARATUS AND METHOD FOR SCREWING A SCREW INTO A WALL
DISPOSITIF DE TOURNEVIS ET PROCÉDÉ D'INTRODUCTION D'UNE VIS DANS UNE PAROI

(30) Priorität: 19.11.2015 EP 15195407
(43) Veröffentlichungstag der Anmeldung: 26.09.2018
(73) Patentinhaber: Inventio AG, 6052 Hergiswil (CH)
(72) Erfinder: CAMBRUZZI, Andrea, 8057 Zürich (CH); ZIMMERLI, Philipp, 4624 Härkingen (CH); BITZI, Raphael, 6006 Luzern (CH); BÜTLER, Erich, 6030 Ebikon (CH)
(86) Internationale Anmeldenummer: PCT/EP2016/078096
(87) Internationale Veröffentlichungsnummer: WO 2017/085239

(56) Entgegenhaltungen:
- WO-A1-2010/024794
- DE-U1-202011 103 223
- JP-A- 2010 264 514
- US-A- 4 637 775
- US-A- 5 421 696

## Beschreibung

Die Erfindung betrifft eine Schraubvorrichtung gemäss Anspruch 1 und ein Verfahren zum Eindrehen einer Schraube in eine Wand gemäss Anspruch 12. In der WO 2010/24794 A1 wird ein Verbindungselement zwischen einem Greifer und einem Roboterarm eines Industrieroboters beschrieben. Der Industrieroboter soll mit der Kombination aus Greifer und Verbindungselement in die Lage versetzt werden, ungeordnet in einem Behälter liegende Teile aufzunehmen. Das Verbindungselement weist dazu beispielsweise eine zwischen zwei Übertragungselementen angeordnete Gummikugel auf. Ausserdem weist das Verbindungselement eine Kraftmesseinrichtung auf, wobei zur Bestimmung einer Betätigungskraft ein Abstand zwischen den beiden Übertragungselementen bestimmt wird.

In der JP 2010 264514 A wird eine Schraubvorrichtung und ein Verfahren zum Eindrehen einer Schraube in ein Werkstück beschrieben. Die Schraubvorrichtung verfügt über einen Kraftsensor, beispielsweise in Form einer Kraftmessdose. Beim Eindrehen einer Schraube in ein Werkstück wird eine gewünschte Betätigungskraft eingestellt.

Die EP 0 421 323 B1 beschreibt ein Verbindungselement zur Kopplung eines Werkzeugs in Form eines Schleifkopfs zum Schleifen einer Oberfläche eines Werkstücks mit einem Roboterarm. Das Verbindungselement weist einen Kraftsensor in Form eines Dehnmessstreifens auf, um eine auf den Schleifkopf wirkende Kraft zu messen. Ausserdem kann eine Position des Schleifkopfs bestimmt werden. Darauf aufbauend wird eine Kraft- und Positionsregelung durchgeführt. Das Schleifen der Oberfläche eines Werkstücks ist ein vergleichsweise gleichmässiger Vorgang, so dass die auf den Schleifkopf wirkende Kraft zuverlässig und ohne grosse Beeinträchtigungen von Störgrössen gemessen und für die Kraft-Regelung benutzt werden kann.

Es gibt aber auch Anwendungen, bei denen Störgrössen beispielsweise Kraftimpulse in Form von Schlägen oder Vibrationen auf ein an einen Roboterarm gekoppeltes Werkzeug einwirken und so eine direkte Kraftmessung beispielsweise mit einem Dehnmessstreifen erheblich erschweren oder sogar unmöglich machen. Beispielsweise treten beim Eindrehen einer Schraube in eine massive Wand, insbesondere in eine Betonwand derartige Störgrössen auf.

Demgegenüber ist es insbesondere die Aufgabe der Erfindung, eine Schraubvorrichtung mit einem Schrauber und einem Verbindungselement zur Kopplung eines Werkzeugs mit einem Roboterarm vorzuschlagen, welches eine einfache und/oder robuste Bestimmung einer eine Kraft auf den Schrauber kennzeichnende Grösse ermöglicht. Erfindungsgemäss wird diese Aufgabe mit einer Schraubvorrichtung mit den Merkmalen des Anspruchs 1 gelöst. Ausserdem ist es insbesondere die Aufgabe der Erfindung, ein Verfahren zum Eindrehen einer Schraube in eine Wand mit einer an einen Roboterarm angebrachten Schraubvorrichtung vorzuschlagen, welches ein zuverlässiges Einschrauben der Schraube ermöglicht. Erfindungsgemäss wird diese Aufgabe mit einem Verfahren mit den Merkmalen des Anspruchs 12 gelöst.

Die erfindungsgemässe Schraubvorrichtung verfügt über ein Verbindungselement zur Kopplung eines Schraubers mit einem Roboterarm, wobei das Verbindungselement ein erstes, roboterseitiges Übertragungselement, ein zweites, werkzeugseitiges Übertragungselement, ein zwischen dem ersten und zweiten Übertragungselement angeordnetes Rückstellelement und ein Entfernungsmesselement aufweist. Die beiden Übertragungselemente können entgegen einer Rückstellkraft des Rückstellelements, also durch Aufbringen einer Betätigungskraft in einer Betätigungsrichtung aufeinander zu bewegt werden. Das Entfernungsmesselement ist so ausgeführt und angeordnet, dass es eine, einen Abstand zwischen den Übertragungselementen in Betätigungsrichtung repräsentierende Entfernung messen kann. Der Schrauber dient insbesondere zum Eindrehen von Schrauben in eine Wand.

Erfindungsgemäss sind das erste und das zweite Übertragungselement über eine Führung gekoppelt. Die Führung ist so ausgeführt und angeordnet, dass eine Verschiebung der beiden Übertragungselemente zueinander nur in Betätigungsrichtung möglich ist, wobei ein eventuell vorhandenes Spiel in der Führung vernachlässigt wird. Damit wird sichergestellt, dass sich bei einer Bewegung des Roboterarms in Betätigungsrichtung das Werkzeug auch nur in Betätigungsrichtung bewegt wird und nicht auch eine unerwünschte Bewegung quer zur Betätigungsrichtung erfolgt. Dies ist für die Verwendung von einigen Werkzeugen, wie beispielsweise einer Bohrmaschine oder einem Schrauber, wichtig.

Im einfachsten Fall wird die genannte Führung von einem, an einem der Übertragungselemente befestigten und in Betätigungsrichtung ausgerichteten Stift und einer am anderen Übertragungselement ausgeführten korrespondierenden Ausnehmung gebildet, in die der Stift mit möglichst wenig Spiel eintauchen kann.

Da die beiden Übertragungselemente nur entgegen der genannten Rückstellkraft des Rückstellelements aufeinander zu bewegt werden können, stellt die vom Entfernungsmesselement gemessene Entfernung ein Mass für die genannte Betätigungskraft dar, mit der die beiden Übertragungselemente gegeneinander gedrückt werden. Die Betätigungskraft steht im Gleichgewicht mit einer entgegen der Betätigungsrichtung auf den Schrauber wirkenden Kraft, so dass die gemessene Entfernung auch ein Mass für die auf den Schrauber wirkende Kraft darstellt. Damit kann die Betätigungskraft und auch die auf den Schrauber wirkende Kraft auf eine sehr robuste und zuverlässige Art und Weise indirekt gemessen werden.

Die Kombination aus Entfernungsmessung und Rückstellelement sorgt dafür, dass die indirekte Ermittlung der Betätigungskraft sehr unempfindlich auf Stösse und Vibrationen ist. Dies gilt insbesondere dann, wenn die Entfernungsmessung berührungslos erfolgt. Der gemessene Abstand stellt damit eine mit wenigen Störgrössen beaufschlagte Grösse dar und kann damit bei Übermittlung an eine Steuerung des Roboterarms insbesondere als Regelgrösse einer Regelung insbesondere einer Positionsregelung des Roboterarms dienen. Damit können der gemessene Abstand und indirekt die Betätigungskraft und die Kraft auf den Schrauber zuverlässig und robust auf einen gewünschten Wert oder einen gewünschten Verlauf eingeregelt werden.

Das beschriebene Verbindungselement könnte nicht nur mit einem Schrauber, sondern auch mit einem anderen Werkzeug gekoppelt werden. Unter einem Werkzeug soll hier ein Element verstanden werden, mit dem ein Gegenstand bearbeitet oder auch gegriffen und bewegt werden kann. Das Werkzeug kann beispielsweise als eine Bohrmaschine, ein Fräser oder auch als ein Greifer ausgeführt sein. Das Werkzeug kann als ein eigenständiges Werkzeug beispielsweise als eine Bohrmaschine mit eigenem Antrieb ausgeführt sein. Es ist aber auch möglich, dass der Roboterarm über einen Antrieb für das Werkzeug verfügt und das Werkzeug dann beispielsweise nur als ein einfacher Bohrer ausgeführt ist.

Unter einem Roboterarm soll hier ein aktiv bewegbares Element einer mechatronischen Komponente verstanden werden. Eine mechatronische Komponente weist zusammenwirkende mechanische, elektronische und informationstechnische Elemente oder Module auf und kann insbesondere als ein Industrieroboter ausgeführt sein.

Unter einem Industrieroboter kann eine universelle, meist programmierbare Maschine zur Handhabung, Montage und/oder Bearbeitung von Werkstücken und Bauteilen verstanden werden. Solche Roboter sind für einen Einsatz in einem industriellen Umfeld konzipiert und werden bisher beispielsweise bei der industriellen Fertigung komplexer Güter in großen Stückzahlen, beispielsweise bei der Automobilfertigung, eingesetzt.

Üblicherweise weist ein Industrieroboter einen sogenannten Manipulator in Form eines Roboterarms, einen sogenannten Effektor und eine Steuerung auf. Der Roboterarm kann beispielsweise um eine oder mehrere Achsen verschwenkbar und/oder entlang einer oder mehrerer Richtungen verlagerbar sein. Der Effektor kann wie im vorliegenden Fall ein Werkzeug im oben beschriebenen Sinn, aber auch Ähnliches sein. Die Steuerung kann dazu dienen, den Manipulator und/oder den Effektor geeignet anzusteuern, das heisst beispielsweise geeignet zu verlagern und/oder zu führen und damit auch eine bestimmte Betätigungskraft aufzubringen.

Nach einer anfänglichen Programmierung ist ein Industrieroboter typischerweise in der Lage, einen Arbeitsablauf teilautomatisch oder vollautomatisch, das heisst weitgehend autonom, durchzuführen. Eine Ausführung des Arbeitsablaufs kann dabei beispielsweise abhängig von Sensorinformationen in gewissen Grenzen variiert werden. Ferner kann eine Steuerung eines Industrieroboters gegebenenfalls selbstlernend ausgeführt sein.

Die beiden Übertragungselemente des Verbindungselements sind insbesondere scheiben- oder zylinderförmig, insbesondere hohlzylinderförmig ausgeführt. Das Entfernungsmesselement ist ortsfest gegenüber einem der Übertragungselemente angeordnet und misst die Entfernung in Betätigungsrichtung zum anderen Übertragungselement oder einem mit dem anderen Übertragungselement ortsfest verbundenen Element. Die gemessene Entfernung stellt damit ein Mass für den Abstand der beiden Übertragungselemente zueinander in Betätigungsrichtung dar. Mit Kenntnis der Position des Entfernungsmessgeräts gegenüber dem ersten Übertragungselement und der Position des Bauteils, bezüglich dem die Entfernung gemessen wird, gegenüber dem zweiten Übertragungselement, kann der Abstand der beiden Übertragungselemente in Betätigungsrichtung zueinander berechnet werden. Das Entfernungsmessgerät kann dabei auf unterschiedlichen Messprinzipien, wie beispielsweise Ultraschall, Laser, Infrarot, etc. basieren.

In Ausgestaltung der Erfindung ist das Rückstellelement als zumindest eine Feder, insbesondere als eine lineare Feder ausgeführt. Die Federn sind insbesondere als Schraubenfedern ausgeführt, wobei auch andere Arten von Federn, beispielsweise Tellerfedern möglich sind. Es können auch mehrere Federn verwendet werden, die insbesondere parallel zueinander angeordnet sind. Die eine oder mehrere Federn sind in Betätigungsrichtung ausgerichtet, so dass sie in Federrichtung zusammengedrückt werden, wenn beiden Übertragungselemente in Betätigungsrichtung aufeinander zu bewegt werden, also der Abstand zwischen ihnen verkleinert wird.

Bei Federn besteht ein Zusammenhang zwischen einem so genannten Federweg und einer Federkraft in Form einer Rückstellkraft, wobei der Federweg durch ein Auseinanderziehen oder Zusammendrücken der Feder zustande kommen kann. Bei einer linearen Feder besteht ein zumindest näherungsweise linearer Zusammenhang zwischen Federweg und Rückstellkraft, so dass aus einem gemessenen Federweg durch Division durch die so genannte Federkonstante der Feder die Rückstellkraft bestimmt werden kann. Damit kann durch Einstellen eines bestimmten Federwegs eine gewünschte Rückstellkraft eingestellt, beispielsweise eingeregelt werden. Im vorliegenden Fall kann damit durch Einstellen eines vorgegebenen Abstands zwischen den beiden Übertragungselementen eine gewünschte Federkraft und damit Betätigungskraft am Werkzeug eingestellt werden. Dies gilt auch bei Verwendung von nichtlinearen Federn, bei welchen ein nichtlinearer Zusammenhang zwischen Federweg und Federkraft besteht.

In Ausgestaltung der Erfindung ist die Feder als eine Schraubenfeder ausgeführt, die um ein Befestigungselement herum angeordnet ist, also durch deren hohlen Innenraum ein Befestigungselement verläuft, welche das erste und zweite Übertragungselement verbindet und den möglichen Abstand zwischen dem ersten und zweiten Übertragungselement begrenzt. Damit wird auf einfache Weise eine Führung und Sicherung der Federn erreicht und gleichzeitig die Verbindung der beiden Übertragungselemente realisiert. Das Befestigungselement ist insbesondere als eine Schraube mit einem Schraubenkopf und einem Schaft ausgeführt. Eines der Übertragungselemente beispielsweise das erste Übertragungselement weist eine gestufte Durchgangsbohrung auf, die so ausgeführt ist, dass der Schaft durch die Bohrung geführt werden kann und der Schraubenkopf an der Stufung aufliegen kann. Das zweite Übertragungselement weist eine Gewindebohrung auf, in die der Schaft der Schraube eingedreht ist. Damit verbindet die Schraube die beiden Übertragungselemente und begrenzt durch das Zusammenwirken des Schraubenkopfs mit der Stufung der Durchgangsbohrung den Abstand der beiden Übertragungselemente zueinander. Gleichzeitig können die beiden Übertragungselemente aufeinander zu bewegt werden.

In Ausgestaltung der Erfindung ist ein Entfernungssensor des Entfernungsmesselements ortsfest gegenüber dem ersten Übertragungselement angeordnet und das Entfernungsmesselement misst einen Abstand zum zweiten Übertragungselement. Das Entfernungsmesselement weist neben dem Entfernungssensor auch insbesondere eine Auswerteeinheit auf, welche ebenfalls ortsfest gegenüber dem ersten Übertragungselement angeordnet ist. Der Entfernungssensor und die Auswerteeinheit können in einer Einheit zusammengefasst oder auch getrennt voneinander angeordnet sein. Durch die ortsfeste Verbindung mit dem ersten Übertragungselement ist der Entfernungssensor auch ortsfest mit dem Roboterarm verbunden, was eine sichere Verbindung mit dem Roboterarm ermöglicht.

In Ausgestaltung der Erfindung verfügt das Entfernungsmesselement über einen optischen Entfernungssensor, welcher insbesondere auf einer Laser-Abstandsmessung basiert. Derartige Entfernungsmesselemente sind einerseits einfach aufgebaut und dennoch sehr genau. Sie sind ausserdem in grosser Anzahl und in verschiedenen Ausführungen auf dem Markt erhältlich.

In Ausgestaltung der Erfindung weist die Führung wenigstens einen Kugelkäfig auf, welcher parallel zur Betätigungsrichtung zwischen den beiden Übertragungselementen angeordnet ist. Ein Kugelkäfig besteht aus einem insbesondere hohlzylinderförmigen Grundelement mit Ausnehmungen, in denen einzelne Kugeln frei rotierbar angeordnet sind und nach innen und aussen über das Grundelement hinaus ragen. Damit wird eine besonders genaue und reibungsarme Führung ermöglicht. Dies ermöglicht zum einen eine sehr exakte Bewegung des Werkzeugs in Betätigungsrichtung und zum anderen eine exakte Einstellung, beispielsweise Regelung eines gewünschten Abstands zwischen den beiden Übertragungselementen und damit einer gewünschten Betätigungskraft.

Die Führung weist in diesem Fall neben dem Kugelkäfig eine an einem der Übertragungselemente angeordnete und in Betätigungsrichtung ausgerichtete, zylinderförmige Führungsstange und eine an dem anderen Übertragungselement angeordnete, hohlzylinderförmige Führungsbuchse auf, in die die Führungsstange eintauchen kann. Zwischen der Führungsstange und der Führungsbuchse ist der Kugelkäfig angeordnet.

In Ausgestaltung der Erfindung verfügt das Verbindungselement über einen Dämpfer, welcher über das Werkzeug eingeleitete Schläge in dämpft. Die Dämpfung der Schläge schont zum einen die Bauteile des Verbindungselements und des Roboterarms und verbessert insbesondere die Einstell- bzw. Regelbarkeit des Abstands zwischen den beiden Übertragungselementen.

Der Dämpfer ist beispielsweise als einer oder mehrere parallel angeordnete Gummipuffer ausgeführt, welche in grosser Auswahl und kostengünstig auf dem Markt erhältlich sind. Es ist aber auch möglich, dass der Dämpfer als ein Teleskopdämpfer ausgeführt ist.

Das Verbindungselement kann auch statt der Kombination aus den beiden Übertragungselementen mit Rückstellelement und Dämpfer auch nur einen Dämpfer aufweisen. Ein derartiges Verbindungselement kann eingesetzt werden, wenn die Einstellung der Betätigungskraft nicht zwingend notwendig ist, aber eine Dämpfung der Schläge in Betätigungsrichtung zur Schonung der Bauteile erwünscht ist. Ein derartiges Verbindungselement kann beispielsweise zur Verbindung mit einer Schlagbohrmaschine verwendet werden. Beim Bohren mit einer Schlagbohrmaschine treten starke Schläge auf, wobei die Einstellung einer bestimmten Betätigungskraft aber nicht zwingend notwendig ist.

In Ausgestaltung der Erfindung ist der Dämpfer im Kraftfluss zwischen dem Schrauber und einem Anschlusselement angeordnet ist, welches einen Anschluss an den Roboterarm ermöglicht. Durch die Anordnung des Dämpfers im Kraftfluss zwischen Schrauber und Anschlusselement ist eine besonders effektive Dämpfung möglich. Unter einer Anordnung im Kraftfluss soll hier verstanden werden, dass der Dämpfer eine auf den Schrauber wirkende Kraft aufnimmt und an das Anschlusselement und damit an den Roboterarm weiterleitet.

In Ausgestaltung der Erfindung weist der Dämpfer eine Führung auf, welche so ausgeführt und angeordnet ist, dass eine Verformung des Dämpfers quer zur Betätigungsrichtung unmöglich ist, wobei ein eventuell vorhandenes Spiel in der Führung vernachlässigt wird. Die Führung lässt also nur eine Verformung des Dämpfers in Betätigungsrichtung und/oder durch eine Drehung um die Betätigungsrichtung zu. Wenn das Werkzeug als eine Schlagbohrmaschine ausgeführt ist, ist insbesondere die Dämpfung in Betätigungsrichtung wichtig. Bei der Ausführung des Werkzeugs als ein Schlagschrauber, ist insbesondere die Dämpfung in der genannten Drehrichtung wichtig.

Damit wird sichergestellt, dass sich bei einer Bewegung des Roboterarms in Betätigungsrichtung das Werkzeug auch nur in Betätigungsrichtung bewegt wird und nicht auch eine unerwünschte Bewegung quer zur Betätigungsrichtung erfolgt. Dies ist für die Verwendung von einigen Werkzeugen, wie beispielsweise einer Bohrmaschine oder einem Schrauber, wichtig.

Wenn der Dämpfer als ein Teleskopdämpfer ausgeführt ist, soll unter dem Eintauchen einer Kolbenstange in einen Zylinder des Teleskopdämpfers auch eine Verformung des Dämpfers verstanden werden.

In Ausgestaltung der Erfindung ist der Dämpfer bezüglich des zweiten Übertragungselements auf einer dem ersten Übertragungselement gegenüberliegenden Seite und somit werkzeugseitig vom zweiten Übertragungselement angeordnet. Damit kommen über das Werkzeug eingeleitete Schläge bereits gedämpft am zweiten Übertragungselement an, wodurch die Abstandsmessung und damit auch die Einstellung eines gewünschten Abstands möglichst wenig beeinträchtigt und damit sehr genau erfolgen kann.

Das Verbindungselement könnte auch mit unterschiedlichen Werkzeugen koppelbar sein. Damit wäre das Verbindungselement sehr flexibel einsetzbar. Es könnte insbesondere so ausgeführt sein, dass es mit handelsüblichen, handbetätigbaren Werkzeugen, wie beispielsweise Schrauber oder Bohrmaschinen gekoppelt werden kann. Das Verbindungselement kann optional über an die spezielle Form eines Griffs des Werkzeugs anpassbare Adapterelemente verfügen. Dies ermöglicht neben der flexiblen Einsetzbarkeit auch eine kostengünstige Umsetzung, da die genannten Werkzeuge in grosser Anzahl und zu vergleichsweise günstigen Preisen auf dem Markt erhältlich sind.

Es ist aber auch möglich, dass das Verbindungselement mit dem Werkzeug eine nicht trennbare Einheit bildet, die speziell einem Einsatzzweck dient und für diesen optimiert ist.

In Ausgestaltung der Erfindung weist das Verbindungselement einen Schnellwechselanschluss auf. Dieser ist so ausgeführt, dass das Verbindungselement über den Schnellwechselanschluss ohne einen manuellen Eingriff mit einem Roboterarm gekoppelt werden kann. Damit kann der Roboterarm auf einfache und schnelle Weise mit unterschiedlichen Verbindungselementen und damit unterschiedlichen Werkzeugen gekoppelt werden. Ein Roboterarm kann damit automatisch unterschiedliche Arbeiten mit unterschiedlichen Werkzeugen ohne einen manuellen Eingriff eines Monteurs erledigen. Dies ermöglicht einen besonders flexiblen und auch kostengünstigen Einsatz des Roboterarms.

Der Schnellwechselanschluss kann beispielsweise pneumatisch betätigt sein, wobei über eine Beaufschlagung mit Druckluft eine formschlüssige Verbindung zwischen Roboterarm und Verbindungselement herstellbar ist. Derartige Schnellwechselanschlüsse sind bekannt und auf dem Markt verfügbar.

Die oben genannte Aufgabe wird durch ein Verfahren zum Eindrehen einer Schraube in eine Wand mit einer, von einem Roboterarm geführten Schraubvorrichtung gelöst, wobei die Schraubvorrichtung mit einer Betätigungskraft in einer Betätigungsrichtung in Richtung Wand geführt wird, beim Führen der Schraubvorrichtung in Richtung Wand eine die Betätigungskraft kennzeichnende Grösse erfasst wird und die Schraubvorrichtung so betätigt wird, dass die genannte Grösse innerhalb eines festlegbaren Bereichs liegt und insbesondere konstant ist. Das genannte Verfahren ermöglicht ein sicheres Einschrauben der Schraube, bei welchem zum einen der Kontakt zwischen Schraubvorrichtung und Schraube während des kompletten Einschraubvorgangs sicher bestehen bleibt und zum anderen die Gefahr eines Verklemmens und damit Blockieren der Schraube sehr gering ist.

Unter der genannten Betätigung der Schraubvorrichtung soll in diesem Zusammenhang sowohl das Führen, also Bewegen der Schraubvorrichtung insbesondere in Richtung Wand, als auch eine eingestellte Drehzahl der Schraubvorrichtung und damit einer von der Schraubvorrichtung gedrehten Schraube verstanden werden.

Durch das Gewinde der Schraube bewegt sich eine sich drehende Schraube selbständig in ein Befestigungsloch hinein. Folgt eine Schraubvorrichtung nicht schnell genug, kann der Kontakt zwischen Schraubvorrichtung und Schraube verloren gehen und die Schraubvorrichtung muss neu aufgesetzt werden. Dies kostet zum einen Zeit und ist im vorliegenden Fall einer von einem Roboterarm geführten Schraubvorrichtung auch nur sehr aufwändig realisierbar. Wird die Schraubvorrichtung im Verhältnis zur Drehzahl der Schraubvorrichtung und damit der Drehzahl der Schraube zu schnell in Richtung Befestigungsloch und damit in Betätigungsrichtung bewegt, kann die Betätigungskraft zu gross werden und die Schraube kann verklemmen und das Eindrehen kann blockiert werden. Das Eindrehen muss dann unterbrochen werden und die Schraube eventuell wieder ein Stück herausgedreht werden. Das kostet zum einen ebenfalls Zeit und ist im vorliegenden Fall einer von einem Roboterarm geführten Schraubvorrichtung ebenfalls nur sehr aufwändig realisierbar.

Die Erfinder haben erkannt, dass mit der erfindungsgemässen Erfassung einer die Betätigungskraft kennzeichnenden Grösse und dem Betätigen der Schraubvorrichtung in der Weise, dass die genannte Grösse innerhalb eines festlegbaren Bereichs liegt und bei entsprechender Wahl des genannten Bereichs die oben genannten Probleme vermieden werden können und die Schraube sicher und zuverlässig eingeschraubt werden kann. Der genannte Bereich hängt von einigen Faktoren, wie beispielsweise dem verwendeten Werkzeug, der Art der Schrauben und der Beschaffenheit der Wand ab. Er kann beispielsweise so gewählt werden, dass die Betätigungskraft zwischen 20 und 100 N, insbesondere ca. 50 N beträgt.

Die Einstellung der genannten Grösse kann mittels einer Änderung der Führung, das heisst einer Änderung der Position der Schraubvorrichtung und damit des Roboterarms erfolgen. Wenn die Betätigungskraft zu gross wird, wird beispielsweise die Schraubvorrichtung langsamer in Richtung Wand bewegt. Alternativ dazu kann die Einstellung der genannten Grösse mittels einer Änderung der Drehzahl der Schraubvorrichtung und damit der Drehzahl der Schraube erfolgen. Durch die Änderung der Drehzahl ändert sich auch die Geschwindigkeit, mit der sich die Schraube in Richtung Wand bewegt. Ist die Betätigungskraft zu gross, dann wird die Drehzahl vergrössert und die Schraube bewegt sich schneller in Richtung Wand, so dass bei gleichmässiger Bewegung der Schraubvorrichtung in Richtung Wand die Betätigungskraft abnimmt. Ist die Betätigungskraft zu klein, dann wird die Drehzahl verkleinert. Es ist ebenfalls möglich, dass sowohl die Führung der Schraubvorrichtung, als auch seine Drehzahl verändert werden. Die Einstellung der genannten Grösse erfolgt insbesondere mittels einer Regelung, im Speziellen mittels einer PID-Regelung.

Die die Betätigungskraft kennzeichnende Grösse kann beispielsweise als ein Federweg einer zwischen Roboterarm und Schraubvorrichtung angeordneten und in Betätigungsrichtung ausgerichteten Feder ausgeführt sein. Es sind aber auch andere Grössen denkbar.

Unter einer Schraubvorrichtung oder einem Schrauber soll in diesem Zusammenhang eine Maschine mit einem insbesondere elektrischen Antrieb verstanden werden, die mit einem Schraubenkopf gekoppelt werden kann und durch die eine Schraube in Rotation versetzt werden kann.

Die Schraube wird insbesondere in ein Befestigungsloch in Form eines Bohrlochs in der Wand eingeschraubt. Die Schraube kann beispielsweise als ein so genannter Schraubanker oder Schraubdübel ausgeführt sein, die direkt und damit ohne vorheriges Einbringen eines Dübels in ein Befestigungsloch eingeschraubt werden können. Es sind aber auch andere Arten von Schrauben denkbar.

Für den im erfindungsgemässen Verfahren verwendeten Roboterarm gelten die oben im Zusammenhang mit dem Verbindungselement gemachten Ausführungen.

Die Verbindung zwischen dem Roboterarm und der Schraubvorrichtung wird mit einem oben beschriebenen Verbindungselement hergestellt und als die die Betätigungskraft kennzeichnende Grösse wird die vom Entfernungsmessgerät gemessene Entfernung genutzt.

Das erfindungsgemässe Verfahren kann insbesondere beim Fixieren eines Aufzugteilehalters in einem Aufzugschacht einer Aufzugsanlage eingesetzt werden. Der Aufzugteilehalter ist insbesondere als ein Schienenbügelunterteil ausgeführt, an das ein Schienenbügeloberteil befestigt werden kann, an dem dann eine Führungsschiene für eine Kabine der Aufzugsanlage befestigt wird. Der Aufzugteilehalter kann aber auch für die Halterung von anderen Bauteilen, beispielsweise einer Führungsschiene eines Gegengewichts in einem Aufzugschacht vorgesehen sein. Das mit dem Aufzugteilehalter gehaltene Bauteil einer Aufzugsanlage kann direkt oder wie beschrieben unter Verwendung eines Zwischenteils mit dem Aufzugteilehalter verbunden sein. Ein Verfahren zum Fixieren eines Aufzugteilehalters in einem Aufzugschacht einer Aufzugsanlage ist in der nicht vorveröffentlichten europäischen Patentanmeldung mit der Anmeldenummer 15193501.2 beschrieben. Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine mit einem Roboterarm verbundene Schraubvorrichtung,
- Fig. 2: ein Verbindungselement der Schraubvorrichtung aus Fig. 1 in einem um 90° gedrehten Schnitt,
- Fig. 3: ein Verbindungselement in einer vereinfachten Ausführungsform und
- Fig. 4: ein zweites Ausführungsbeispiel einer Schraubvorrichtung.

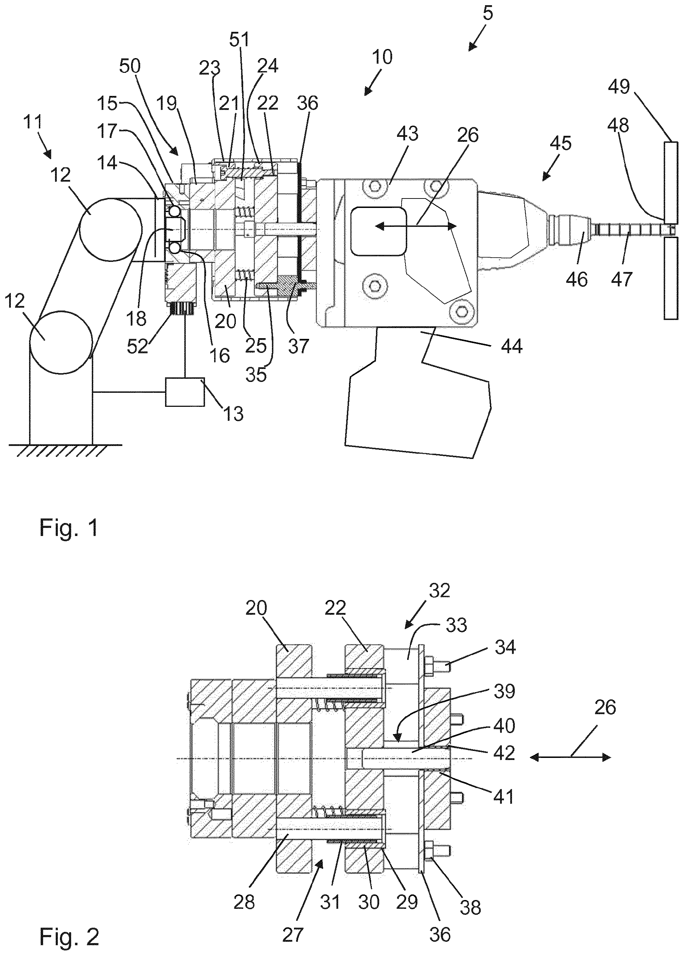

Gemäss Fig. 1 ist ein Verbindungselement 10 mit einem Roboterarm 11 verbunden, welcher in dieser vereinfachten Darstellung nur über zwei Gelenke 12 verfügt. Der Roboterarm 11 wird von einer Robotersteuerung 13 angesteuert, so dass er verschiedene Positionen geregelt anfahren kann. Der Aufbau und die Funktionsweise von Roboterarmen und Robotersteuerungen sind allgemein bekannt, so dass hier nicht weiter auf sie eingegangen wird.

Am Roboterarm 11 ist ein roboterseitiger, erster Schnellwechselanschluss 14 eines Schnellwechselsystems angeordnet, das mit einem verbindungselementseitigen, zweiten Schnellwechselanschluss 15 des Verbindungselements 10 zusammenwirkt. Der zweite Schnellwechselanschluss 15 ist hauptsächlich hohlzylinderförmig ausgeführt und verfügt über eine innen umlaufende Nut 16, in die über einen nicht näher dargestellten Käfig am ersten Schnellwechselanschluss 14 verbundene Kugeln 17 eingreifen können. Der erste Schnellwechselanschluss 14 weist ausserdem einen druckluftbetätigten Stempel 18 auf, der in Richtung Verbindungselement 10 ausgefahren und in die Gegenrichtung eingefahren werden kann. Beim Ausfahren in Richtung Verbindungselement 10 werden die Kugeln 17 in die Nut 16 des zweiten Schnellwechselanschlusses 15 gedrückt und so eine formschlüssige Verbindung zwischen den beiden Schnellwechselanschlüssen 14, 15 und damit zwischen dem Roboterarm 11 und dem Verbindungselement 10 hergestellt.

Dadurch wird der Roboterarm 11 mit dem Verbindungselement 10 gekoppelt. Soll die Verbindung wieder gelöst werden, wird der Stempel 18 wieder eingefahren und die Kugeln 17 können wieder nach innen bewegt werden und die Nut 16 verlassen. Der Roboterarm 11 kann dann vom Verbindungselement 10 weg bewegt und von ihm getrennt werden. Das beschriebene Verbinden und Lösen kann voll automatisch ohne den manuellen Eingriff eines Werkers oder Monteurs erfolgen.

An den zweiten Schnellwechselanschluss 15 schliesst sich ein hauptsächlich hohlzylinderförmiges Zwischenelement 19 an, welches auf der gegenüber liegenden Seite mit einem ersten, roboterseitigen Übertragungselement 20 verbunden ist. Das erste Übertragungselement 20 ist ebenfalls holzylinderförmig ausgeführt und ist über insgesamt sechs Befestigungselemente in Form von Schrauben 21 mit einem zweiten, werkzeugseitigen Übertragungselement 22 verbunden. Das zweite Übertragungselement 22 ist ebenfalls hauptsächlich hohlzylinderförmig ausgeführt und koaxial zum ersten Übertragungselement 20 angeordnet. Von den insgesamt sechs, gleichmässig verteilten Schrauben 21 sind in der dargestellten Schnittdarstellung nur drei zu sehen.

Um die Verbindung der beiden Übertragungselemente 20, 22 zu gewährleisten und gleichzeitig zu ermöglichen, dass die beiden Übertragungselemente 20, 22 auf einander zu bewegt werden können, weist das erste Übertragungselement 20 gestufte Durchgangsbohrungen 23 auf, durch welche ein Schaft der Schrauben 21 hindurchreicht und ein Schraubenkopf an der Stufung aufliegt. Die Durchgangsbohrungen 23 weisen einen so grossen Durchmesser auf, dass das erste Übertragungselement 20 gegenüber den Schraubenschäften verschoben werden kann. Das zweite Übertragungselement 22 verfügt über korrespondierende Gewindebohrungen 24, in die die Schrauben 21 teilweise eingeschraubt sind.

Die Schrauben 21 in Kombination mit den gestuften Durchgangsbohrungen 23 und der Gewindebohrungen 24 begrenzen damit einen möglichen Abstand zwischen den beiden Übertragungselementen 20, 22. Zwischen den beiden Übertragungselementen 20, 22 und um die Schäfte der Schrauben 21 herum ist jeweils ein Rückstellelement in Form einer linearen Schraubenfeder 25 angeordnet, so dass die Übertragungselemente 20, 22 gegen eine Rückstellkraft der Schraubenfedern 25 in einer Betätigungsrichtung 26 aufeinander zu bewegt werden können.

Die beiden Übertragungselemente 20, 22 sind zusätzlich über eine Führung 27, welche in Fig. 2 detaillierter dargestellt ist, gekoppelt. Die Führung 27 besteht aus einer zylinderförmigen Führungsstange 28, die fest mit dem ersten Übertragungselement 20 verbunden und in Betätigungsrichtung 26 ausgerichtet ist. Das zweite Übertragungselement 22 weist eine Ausnehmung 29 auf, in der eine hohlzylinderförmige Führungsbuchse 30 angeordnet ist, Die Ausnehmung 29 und die Führungsbuchse 30 sind so angeordnet, dass die Führungsstange 28 in die Führungsbuchse 30 eintauchen kann. Zwischen der Führungsstange 28 und der Führungsbuchse 30 ist ein Kugelkäfig 31 parallel zur Betätigungsrichtung 26 angeordnet, der sowohl auf der Führungsstange 28, als auch auf der Führungsbuchse 30 abrollt. Damit gewährleistet die Führung 27, dass eine Verschiebung der beiden Übertragungselemente 20, 22 zueinander nur in Betätigungsrichtung 26 möglich ist. Das Verbindungselement 10 weist zwei identisch ausgeführte Führungen 27 auf.

Auf der dem ersten Übertragungselement 20 gegenüberliegenden Seite schliesst sich an das zweite Übertragungselement 22 ein Dämpfer 32 an, der über ein Werkzeug 45 eingeleitete Schläge dämpft. Der Dämpfer 32 verfügt über insgesamt sechs gleichmässig verteilte Gummipuffer 33, in die auf beiden Seiten in Betätigungsrichtung 26 orientierte Gewindestifte 34 eingegossen sind. Die Gummipuffer 33 sind in korrespondierende Gewindebohrungen 35 im zweiten Übertragungselement 22 eingeschraubt. Auf der anderen Seite schliesst sich ein Abdeckelement 36 mit Durchgangsbohrungen 37 an, durch welche jeweils ein Gewindestift 34 der Gummipuffer 33 ragt. Das Abdeckelement 36 ist mit auf die Gewindestifte 34 aufgedrehten Muttern 38 an den Gummipuffern 33 fixiert. Der Dämpfer 32 weist eine Führung 39 auf, welche eine Verformung der Gummipuffer 33 quer zur Betätigungsrichtung 26 verhindert. Die Führung 39 verfügt dazu über einen in Betätigungsrichtung ausgerichteten Stift 40, der fest mit dem zweiten Übertragungselement 22 verbunden ist und einer am Abdeckelement 36 ausgeführten korrespondierenden Ausnehmung 41, in die der Stift 40 eintauchen und sich um die Betätigungsrichtung 26 drehen kann. In der Ausnehmung 41 ist ausserdem eine Gleitbuchse 42 angeordnet.

Das Abdeckelement 36 ist auf der dem zweiten Übertragungselement 22 gegenüberliegenden Seite fest mit einem Adapterelement 43 verbunden. Das Adapterelement 43 verfügt über eine nicht dargestellte Innenkontur, die korrespondierend zu einem Haltegriff 44 des Werkzeugs in Form eines handbetätigbaren Schraubers 45 ausgeführt ist. Das Adapterelement 42 kann geöffnet und nach dem Einbringen des Schraubers 45 wieder geschlossen werden. Der Schrauber 45 kann damit mit dem Adapterelement 43 bewegungsfest gekoppelt werden, es ist aber auch ein Wechsel des Werkzeugs möglich. Das Verbindungselement 10 und der Schrauber 45 bilden zusammen eine Schraubvorrichtung 5. Der Dämpfer 32 ist im Kraftfluss zwischen Schrauber 45 und dem zweiten Schnellwechselanschlusses 15 angeordnet. Der zweite Schnellwechselanschluss 15 kann als ein Anschlusselement angesehen werden, das einen Anschluss der Schraubvorrichtung 5 an den Roboterarm 11 ermöglicht.

Es ist auch möglich, dass die Schraubvorrichtung keinen Dämpfer aufweist,

An einer Spitze 46 des Schraubers 45 ist eine in Betätigungsrichtung 26 ausgerichtete Schraube 47 mit einem nicht dargestellten Sechskant-Schraubenkopf aufgenommen. Mittels des Schraubers 45 kann die Schraube 47 in ein Befestigungsloch 48 einer Wand 49 eingedreht werden. Die Schraube 47 ist insbesondere als ein Schraubanker ausgeführt, der direkt und ohne Einsatz eines Dübels eingedreht werden kann.

Zum Eindrehen der Schraube 47 kann der Roboterarm 11 über das Verbindungselement 10 eine Betätigungskraft in Betätigungsrichtung 26 auf die Schraubvorrichtung 5 beziehungsweise den Schrauber 45 und damit auf die Schraube 47 ausüben. Zur Einstellung der Betätigungskraft weist das Verbindungselement 10 ein Entfernungsmesselement 50 auf, das am Zwischenelement 19 und damit ortsfest gegenüber dem ersten Übertragungselement 20 angeordnet ist. Ein Entfernungssensor 51 des Entfernungsmesselements 50, welcher einen Laserstrahl aussenden und empfangen kann, ist in Betätigungsrichtung 26 auf das zweite Übertragungselement 22 ausgerichtet, so dass das Entfernungsmesselement 50 die Entfernung des Entfernungssensors 51 zum zweiten Übertragungselement 22 messen kann. Wegen der ortsfesten Anordnung des Entfernungsmesselements 50 und des Entfernungssensors 51 gegenüber dem ersten Übertragungselements 20 kann daraus der Abstand zwischen den beiden Übertragungselementen 20, 22 bestimmt werden, so dass die gemessene Entfernung den Abstand zwischen den beiden Übertragungselementen 20, 22 in Betätigungsrichtung repräsentiert.

Das Entfernungsmesselement 50 leitet die gemessene Entfernung über einen Signalanschluss 52 an die Robotersteuerung 13 weiter. Die Robotersteuerung 13 kann den Roboterarm 11 und den Schrauber 45 so ansteuern und damit das Verbindungselement 10 inklusive Schrauber 45 so betätigen, dass die gemessene Entfernung innerhalb eines vorgegebenen Bereichs liegt und insbesondere konstant ist. Die Einstellung kann beispielsweise mittels eines PID-Reglers erfolgen, wobei entweder die Geschwindigkeit des Schraubers 45 in Richtung Wand 49, also in Betätigungsrichtung 26, oder eine Drehzahl des Schraubers 45 als Stellgrösse des PID-Reglers dient. Da die beiden Übertragungselemente 20, 22 nur gegen die Rückstellkraft der Schraubenfedern 25 aufeinander zu bewegt werden können, kann von der gemessenen Entfernung direkt auf die auf den Schrauber 45 wirkende Betätigungskraft geschlossen werden, womit über die Einstellung der gemessenen Entfernung indirekt eine Einstellung der Betätigungskraft erfolgt. Der genannte Bereich kann beispielsweise so gewählt werden, dass die Betätigungskraft zwischen 20 und 100 N, insbesondere ca. 50 N beträgt. Die dazu einzustellende Entfernung ist dabei abhängig von den Abmessungen und der Anordnung der einzelnen Bauteile des Verbindungselements 10 und insbesondere auch von den Federkonstanten der Schraubenfedern 21.

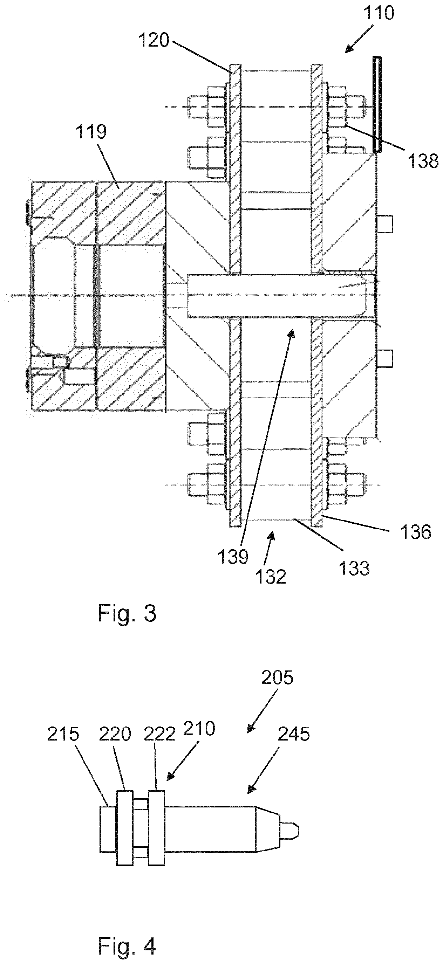

Die Fig. 3 zeigt ein Verbindungselement 110 in einer gegenüber dem Verbindungselement 10 aus Fig. 1 vereinfachten Ausführungsform. Das Verbindungselement 110 ist ähnlich dem Verbindungselement 10 aufgebaut, weshalb nur auf die Unterschiede der Verbindungselemente 10, 110 eingegangen wird.

Das Verbindungselement 110 weist keine zwei gegeneinander verschiebbaren Übertragungselemente auf. Statt zwei Übertragungselemente weist das Verbindungselement 110 nur ein Übertragungselement 120 auf, das fest mit einem Zwischenelement 119 verbunden ist. Zwischen dem Übertragungselement 120 und einem Abdeckelement 136 sind Gummipuffer 133 angeordnet, die mit Muttern 138 fixiert sind. Die Gummipuffer 133 sind damit Bestandteile eines Dämpfers 132, der ebenfalls eine Führung 139 aufweist.

In Fig. 4 ist eine Schraubvorrichtung 205 mit einem Schrauber 245 und einem Verbindungselement 210 dargestellt, bei der ein spezieller Schrauber 245 verwendet wird, der nicht für die Führung von Hand vorgesehen ist. Die Schraubvorrichtung 205 ist sehr ähnlich wie die Schraubvorrichtung 5 aus Fig. 1 aufgebaut, weshalb nur auf die Unterschiede der Schraubvorrichtungen eingegangen wird.

Der Schrauber 245 verfügt nicht über einen Haltegriff, über den eine Verbindung zum Verbindungselement 210 hergestellt wird. Der Schrauber 245 ist vielmehr direkt mit einem zweiten Übertragungselement 222 verbunden. Das zweite Übertragungselement 222 ist wie beim Verbindungselement 10 der Schraubvorrichtung 5 aus Fig. 1 mit einem ersten Übertragungselement 220 gekoppelt, das auf einer entgegengesetzten Seite mit einem zweiten Schnellwechselanschlusses 215 verbunden ist. Die Schraubvorrichtung 205 weist damit keinen Dämpfer auf.

## Patentansprüche

1. Schraubvorrichtung mit einem Schrauber (45, 245) und einem Verbindungselement (10, 210) zur Kopplung des Schraubers (45) mit einem Roboterarm (11),
wobei das Verbindungselement (10, 210) aufweist:
- ein erstes, roboterseitiges Übertragungselement (20),
- ein zweites, werkzeugseitiges Übertragungselement (22),
- ein zwischen dem ersten und zweiten Übertragungselement (20, 22) angeordnetes Rückstellelement (25) und
- ein Entfernungsmesselement (50),
wobei die beiden Übertragungselemente (20, 22) entgegen einer Rückstellkraft des Rückstellelements (25) in einer Betätigungsrichtung (26) aufeinander zu bewegt werden können und das Entfernungsmesselement (50) so ausgeführt und angeordnet ist, dass es eine, einen Abstand zwischen den Übertragungselementen (20, 22) in Betätigungsrichtung (26) repräsentierende Entfernung messen kann,
**dadurch gekennzeichnet, dass**
das erste und das zweite Übertragungselement (20, 22) des Verbindungselements (10) über eine Führung (27) gekoppelt sind, welche so ausgeführt und angeordnet ist, dass eine Verschiebung der beiden Übertragungselemente (20, 22) zueinander nur in Betätigungsrichtung (26) möglich ist.

2. Schraubvorrichtung nach Anspruch 1,
**dadurch gekennzeichnet, dass**
das Rückstellelement (25) des Verbindungselements (10) als zumindest eine Feder (25) ausgeführt ist.

3. Schraubvorrichtung nach Anspruch 2,
**dadurch gekennzeichnet, dass**
die Feder (25) als eine Schraubenfeder (25) ausgeführt ist, die um ein Befestigungselement (21) herum angeordnet ist, welche das erste und zweite Übertragungselement (20, 22) verbindet und den möglichen Abstand zwischen dem ersten und zweiten Übertragungselement (20, 22) begrenzt.

4. Schraubvorrichtung nach einem der Ansprüche 1 bis 3,
**dadurch gekennzeichnet, dass**
ein Entfernungssensor (51) des Entfernungsmesselements (50) des Verbindungselements (10) ortsfest gegenüber dem ersten Übertragungselement (20) angeordnet ist und das Entfernungsmesselement (50) einen Abstand zum zweiten Übertragungselement (22) des Verbindungselements (10) misst.

5. Schraubvorrichtung nach einem der Ansprüche 1 bis 4,
**dadurch gekennzeichnet, dass**
das Entfernungsmesselement (50) über einen optischen Entfernungssensor (51) verfügt.

6. Schraubvorrichtung nach einem der Ansprüche 1 bis 5,
**dadurch gekennzeichnet, dass**
die Führung (27) wenigstens einen Kugelkäfig (31) aufweist, welcher parallel zur Betätigungsrichtung (26) zwischen den beiden Übertragungselementen (20, 22) angeordnet ist.

7. Schraubvorrichtung nach einem der Ansprüche 1 bis 6,
**dadurch gekennzeichnet, dass**
das Verbindungselement (10) einen Dämpfer (32) aufweist.

8. Schraubvorrichtung nach Anspruch 7,
**dadurch gekennzeichnet, dass**
der Dämpfer (32) im Kraftfluss zwischen dem Schrauber (45) und einem Anschlusselement (15, 215) angeordnet ist, welches einen Anschluss an den Roboterarm (11) ermöglicht.

9. Schraubvorrichtung nach Anspruch 7,
**dadurch gekennzeichnet, dass**
der Dämpfer (32) eine Führung (39) aufweist, welche so ausgeführt und angeordnet ist, dass eine Verformung des Dämpfers (32) quer zur Betätigungsrichtung (26) unmöglich ist.

10. Schraubvorrichtung nach Anspruch 7 oder 8,
**dadurch gekennzeichnet, dass**
der Dämpfer (32) bezüglich des zweiten Übertragungselements (22) auf einer dem ersten Übertragungselement (20) gegenüberliegenden Seite angeordnet ist.

11. Schraubvorrichtung nach einem der Ansprüche 1 bis 10,
**dadurch gekennzeichnet, dass**
das Verbindungselement (10, 210) einen Schnellwechselanschluss (15, 215) aufweist, welcher so ausgeführt ist, dass das Verbindungselement (10) über den Schnellwechselanschluss (15) ohne einen manuellen Eingriff mit einem Roboterarm (11) gekoppelt werden kann.

12. Verfahren zum Eindrehen einer Schraube (47) in eine Wand (49) mit einer Schraubvorrichtung (5, 205) gemäss einem der Ansprüche 1 bis 11, welche von einem Roboterarm (11) geführt wird, wobei
- die Schraubvorrichtung (5, 205) mit einer Betätigungskraft in einer Betätigungsrichtung (26) in Richtung Wand (49) geführt wird,
- beim Führen der Schraubvorrichtung (5, 205) in Richtung Wand (49) eine die Betätigungskraft kennzeichnende Grösse erfasst wird und
- die Schraubvorrichtung (5, 205) so betätigt wird, dass die genannte Grösse innerhalb eines festlegbaren Bereichs liegt.

13. Verfahren nach Anspruch 12,
**dadurch gekennzeichnet, dass**
die genannte Grösse auf einen konstanten Wert eingestellt wird.

## Claims

1. A screwing device comprising a screwdriver (45, 245) and a connection element (10, 210) for coupling the screwdriver (45) to a robot arm (11),
wherein the connection element (10, 210) comprises:
- a first, robot-side transmission element (20),
- a second, tool-side transmission element (22),
- a restoring element (25) arranged between the first and second transmission element (20, 22), and
- a distance measuring element (50),
wherein the two transmission elements (20, 22) can be moved toward each other against a restoring force of the restoring element (25) in an actuation direction (26) and the distance measuring element (50) is designed and arranged so as to be able to measure a distance which represents a spacing between the transmission elements (20, 22) in
the actuation direction (26),
**characterized in that**
the first and the second transmission element (20, 22) of the connection element (10) are coupled by a guide (27) that is designed and arranged such that the two transmission elements (20, 22) can be displaced relative to one another only in the actuation direction (26).

2. The screwing device according to claim 1,
**characterized in that**
the restoring element (25) of the connection element (10) is designed as at least one spring (25).

3. The screwing device according to claim 2,
**characterized in that**
the spring (25) is designed as a helical spring (25) which is arranged around a fastening element (21) that connects the first and second transmission element (20, 22) and defines the possible spacing between the first and second transmission element (20, 22).

4. The screwing device according to any of claims 1 to 3,
**characterized in that**
a distance sensor (51) of the distance measuring element (50) of the connection element (10) is arranged so as to be fixed relative to the first transmission element (20), and the distance measuring element (50) measures a spacing from the second transmission element (22) of the connection element (10).

5. The screwing device according to any of claims 1 to 4,
**characterized in that**
the distance measuring element (50) comprises an optical distance sensor (51).

6. The screwing device according to any of claims 1 to 5,
**characterized in that**
the guide (27) comprises at least one ball retainer (31) which is arranged between the two transmission elements (20, 22) and so as to be in parallel with the actuation direction (26).

7. The screwing device according to any of claims 1 to 6,
**characterized in that**
the connection element (10) comprises a damper (32).

8. The screwing device according to claim 7,
**characterized in that**
the damper (32) is arranged in the force flow between the screwdriver (45) and a connector element (15, 215) that makes connection to the robot arm (11) possible.

9. The screwing device according to claim 7,
**characterized in that**
the damper (32) comprises a guide (39) which is designed and arranged such that a deformation of the damper (32) transversely to the actuation direction (26) is impossible.

10. The screwing device according to either claim 7 or claim 8,
**characterized in that**
the damper (32) is arranged on a side opposing the first transmission element (20), relative to the second transmission element (22).

11. The screwing device according to any of claims 1 to 10,
**characterized in that**
the connection element (10, 210) comprises a quick-change connector (15, 215) that is designed such that the connection element (10) can be coupled to a robot arm (11) using the quick-change connector (15), without manual intervention.

12. A method for screwing a screw (47) into a wall (49) using a screwing device (5, 205) according to any of claims 1 to 11, which is guided by a robot arm (11), wherein
- the screwing device (5, 205) is guided toward the wall (49) at an actuating force in an actuation direction (26),
- a variable that is characteristic of the actuating force is sensed while the screwing device (5, 205) is guided toward the wall (49), and
- the screwing device (5, 205) is actuated such that the mentioned variable is within a specifiable range.

13. The method according to claim 12,
**characterized in that**
the mentioned variable is set to a constant value.

## Revendications

1. Dispositif de vissage comportant un tournevis (45, 245) et un élément d'accouplement (10, 210) permettant d'accoupler le tournevis (45) à un bras de robot (11),
dans lequel l'élément d'accouplement (10, 210) présente :
- un premier élément de transmission côté robot (20),
- un second élément de transmission côté outil (22),
- un élément de rappel (25) disposé entre les premier et second éléments de transmission (20, 22) et
- un élément de mesure de distance (50),
dans lequel les deux éléments de transmission (20, 22) peuvent être rapprochés l'un de l'autre dans une direction d'actionnement (26) contre une force de rappel de l'élément de rappel (25) et l'élément de mesure de distance (50) est conçu et agencé de telle sorte qu'il peut mesurer une distance représentant un écart entre les éléments de transmission (20, 22) dans la direction d'actionnement (26),
**caractérisé en ce**
**que** le premier et le second éléments de transmission (20, 22) de l'élément d'accouplement (10) sont accouplés par l'intermédiaire d'un guidage (27), lequel est conçu et agencé de telle sorte qu'un déplacement des deux éléments de transmission (20, 22) l'un par rapport à l'autre n'est possible que dans la direction d'actionnement (26).

2. Dispositif de vissage selon la revendication 1,
**caractérisé en ce**
**que** l'élément de rappel (25) de l'élément d'accouplement (10) est conçu sous la forme d'au moins un ressort (25).

3. Dispositif de vissage selon la revendication 2,
**caractérisé en ce**
**que** le ressort (25) est conçu comme un ressort hélicoïdal (25) qui est disposé autour d'un élément de fixation (21), lequel relie le premier et le second éléments de transmission (20, 22) et délimite l'écart possible entre le premier et le second éléments de transmission (20, 22).

4. Dispositif de vissage selon l'une des revendications 1 à 3,
**caractérisé en ce**
**qu'**un capteur de distance (51) de l'élément de mesure de distance (50) de l'élément d'accouplement (10) est disposé de manière fixe en face du premier élément de transmission (20) et l'élément de mesure de distance (50) mesure un écart par rapport au second élément de transmission (22) de l'élément d'accouplement (10).

5. Dispositif de vissage selon l'une des revendications 1 à 4,
**caractérisé en ce**
**que** l'élément de mesure de distance (50) dispose d'un capteur de distance (51) optique.

6. Dispositif de vissage selon l'une des revendications 1 à 5,
**caractérisé en ce**
**que** le guidage (27) présente au moins une cage à billes (31), laquelle est disposée parallèlement à la direction d'actionnement (26) entre les deux éléments de transmission (20, 22).

7. Dispositif de vissage selon l'une des revendications 1 à 6,
**caractérisé en ce**
**que** l'élément d'accouplement (10) présente un amortisseur (32).

8. Dispositif de vissage selon la revendication 7,
**caractérisé en ce**
**que** l'amortisseur (32) est disposé dans le flux de force entre le tournevis (45) et un élément de connexion (15, 215), lequel permet une connexion au bras de robot (11).

9. Dispositif de vissage selon la revendication 7,
**caractérisé en ce**
**que** l'amortisseur (32) présente un guidage (39), lequel est conçu et disposé de telle sorte qu'une déformation de l'amortisseur (32) transversalement à la direction d'actionnement (26) est impossible.

10. Dispositif de vissage selon la revendication 7 ou 8,
**caractérisé en ce**
**que** l'amortisseur (32) est disposé sur un côté opposé au premier élément de transmission (20) par rapport au second élément de transmission (22).

11. Dispositif de vissage selon l'une des revendications 1 à 10,
**caractérisé en ce**
**que** l'élément d'accouplement (10, 210) présente un connecteur à changement rapide (15, 215), lequel est conçu de telle sorte que l'élément d'accouplement (10) peut être accouplé à un bras de robot (11) par l'intermédiaire du connecteur à changement rapide (15) sans intervention manuelle.

12. Procédé permettant le vissage d'une vis (47) dans une paroi (49) comportant un dispositif de vissage (5, 205) selon l'une des revendications 1 à 11, lequel est guidé par un bras de robot (11), dans lequel
- le dispositif de vissage (5, 205) est guidé avec une force d'actionnement dans une direction d'actionnement (26) en direction de la paroi (49),
- lors du guidage du dispositif de vissage (5, 205) en direction de la paroi (49), une grandeur caractérisant la force d'actionnement est détectée et
- le dispositif de vissage (5, 205) est actionné de telle sorte que ladite grandeur se situe dans une plage pouvant être fixée.

13. Procédé selon la revendication 12,
**caractérisé en ce**
**que** ladite grandeur est réglée à une valeur constante.
